# EUROPEAN PATENT SPECIFICATION

(11) **EP 2 241 189 B1**
(45) Date of publication and mention of the grant of the patent: **08.02.2012**
(21) Application number: 08172810.7
(22) Date of filing: 23.12.2008
(51) Int. Cl.: A23D 7/00, A23D 9/00, A23G 1/36

(54) **Structured edible product with limited SAFA-content**
Texturiertes Speiseprodukt mit begrenztem SAFA-Gehalt
Produit comestible structuré avec contenu SAFA limité

(43) Date of publication of application: 20.10.2010
(73) Proprietor: Fuji Oil Europe, 9042 Gent (BE)
(72) Inventor: CLEENEWERCK, Bernard, 8301, Knokke-Heist (BE)
(74) Representative: Luys, Marie-José A.H.

(56) References cited:
- EP-A- 0 719 090
- EP-A- 0 731 645
- EP-A- 0 875 152
- WO-A-2006/037341
- FR-A- 2 435 206
- US-A- 4 839 192
- US-A1- 2007 286 940

## Description

The present invention relates to a structured edible product with limited SAFA-content and improved texture and mouthfeel as well as to a glyceride composition suitable for use in such product.

### Background of the invention.

From our PCT/EP2006/068709 and PCT/EP2007/051223 edible products are known with a low content of saturated (SAFA) and trans (TFA) unsaturated fats.

PCT/EP2006/068709 describes edible products containing, expressed on total product basis, less than 30 wt. % of saturated fatty acids, between 20 and 100 wt. % of a triglyceride composition, between 0 and 80 wt% of a filler material and less than 15 wt. % of water. The triglyceride composition contains less than 45 wt. % of saturated fatty acids, less than 10 wt. % of trans unsaturated fatty acids, at least 8 wt. % of SUS triglycerides, wherein S is a C16-18 saturated fatty acid, U is unsaturated fatty acid having at least 18 C atoms, less than 15 wt. % of S3, at least 90 wt. % of C8-18 fatty acids, at least 75 wt. % of C18 fatty acids including saturated and unsaturated fatty acids and has an SFC at 20°C of between 5 and 50%.

PCT/EP2007/051223 describes edible products containing, expressed on total product basis, less than 35 wt. % of saturated fatty acids, between 20 and 100 wt. % of a triglyceride composition, between 0 and 80 wt% of a filler material and less than 15 wt. % of water. The triglyceride composition contains less than 50 wt. % of saturated fatty acids, less than 10 wt. % of trans unsaturated fatty acids, at least 10 wt. % of POP triglycerides, wherein P is a palmitic fatty acid, O is oleic acid, a ratio SUS/SUU of at least 1.3, a ratio SUS/S3 of at least 15, at least 90 wt. % of C8-18 fatty acids, a ratio C16/C18 saturated fatty acids of at least 1. The triglyceride composition has an SFC at 20°C of between 3 and 55%.

Both inventions also relate to a process for producing such a product and to triglyceride compositions suitable for use in such a product. The examples describe how structured food products, e.g. confectionery creams can be made with a very low SAFA- and TFA-content, while still exhibiting a surprisingly hard texture.

When envisaging harder products suitable for use in for instance confectionery coatings and tablets or hard creams, it is necessary to increase the amount of the SUS-component and to reduce the part of the liquid oil. Applicant has observed that StOSt-rich fats, wherein St is Stearic acid and O is oleic acid, imply a better hardness than POP-rich fats, wherein P is Palmitic acid. However, with too high StOSt-rich fat levels, products show less good melting properties in the mouth, sometimes called a rather "waxy mouthfeel". Products containing POP-fats do not show this disadvantage, but they are softer, unless the SAFA-level is seriously raised, which can not be the intention when making products with an improved nutritional profile. Typical examples of StOSt-rich fats and POP-rich fats are respectively shea stearin and palm mid fractions.

With the boundaries of the current state of the art, always a compromise had to be made between achieving optimal hardness on the one hand and ensuring optimal melting properties in the mouth on the other hand. For products that should show a hard texture, this is an important limitation. The present invention seeks to provide a solution to this compromise.

A typical example of a food product with a hard texture is chocolate. Chocolate usually has a hard and snappy structure, it melts completely at body temperature, without leaving a sensation of waxiness in the mouth. In chocolate, these remarkable characteristics are obtained by the use of cocoa butter. Cocoa butter is a natural, non-hydrogenated fat. However two thirds of its fats are saturated, which is easily understandable from its typical symmetrical SUS-triglyceride structure (S = Saturated fatty acid; U = Unsaturated fatty acid). Another disadvantage of cocoa butter is that the large majority of the unsaturated fatty acids present consists of mono-unsaturated fatty acids (MUFA), while it is deficient in poly-unsaturated fatty acids (PUFA). Intake of PUFA through food is necessary as they are a source of essential fatty acids which cannot be produced by the human body (for example Omega-3 and Omega-6). From nutritional point of view it is also important to have the right balance of MUFA versus PUFA. Ideally, 6 to 10% of the energy in the consumer's total diet should come from PUFA.

Thus there is a need for food systems, food products and edible products with a limited level of SAFA and/or TFA, which nevertheless show the desired hard or semi-hard structure as well as a good melting sensation in the mouth. There is also a need for food systems and food products, which combine the desired textural properties with the presence of higher levels of and the right balance of MUFA and PUFA.

### Description of the prior art.

EP-A-719.090 discloses fats for use in spreads or margarine which contain less than 35 wt. % of saturated fatty acids, 5-45 wt. % S2U, 0-60 wt. % SU2, 5-95 wt. % U3 and 0-8 wt. % S3. The diglyceride content is kept below 5 wt. % as it is believed that the presence of diglycerides in margarine fats has a negative impact on the crystallization behaviour. The fats disclosed in EP-A-719.090 are characterized by a flat SFC-profile which is typical for margarines, expressed as (N5-N20) being less than 10, N5 and N20 being the SFC at respectively 5 and 20°C. The structuring properties provided by this fat composition are mainly attributed to the presence of 1.5 - 4 wt. % of behenic acid. Water in oil emulsions containing these fats show a good hardness. The spread is produced by mixing the fat, water and some of the other ingredients and additives and pasteurizing the composition at 85°C, followed by a cooling and crystallization process.

EP-A-731.645 discloses blends of a sugar and a triglyceride component, which are suitable for use in filling fats and ice cream coatings and have a SAFA content which is lower than usual, i.e. below 45 wt. %. The triglyceride component comprises at least 40 wt. % of SU2 and 3-50 wt. % of S2U, it is free of TFA and has an N20 of at least 35 and an N30 of less than 10. It is explained that the triglyceride component contains at least 10 wt. % of behenic acid, less than 25 wt. % of StUSt ( U = Unsaturated Fatty Acid; St = C18-0) and that the presence of 0.1 to 10 wt. % of trisaturated triglycerides, especially from palm oil stearin gives better structuring properties. Regardless of their limited SAFA-content, the blends display a good product performance, meaning an acceptable texture, a sufficiently high hardness and good oral melting characteristics. The fillings and coatings are prepared by mixing the ingredients, roll-refining and conching, followed by a cooling process (called "tempering") to below 20°C, preferably below 15°C. During the cooling process a working amount of fat seeds, e.g. cocoa butter seeds may be added. In the examples it is explained that after cooling and storing of the fillings at low temperature for longer periods (e.g. 16 hrs. at 7°C followed by 1 week at 13°C or 18 hrs at 13°C in case a seeding agent was used), an acceptable hardness was found. Example 4 discloses a filling fat with a Stevens' hardness at 20°C of 158 g, the filling contained 50 wt. % of fat, the fat contained 41.7 wt. % of SAFA.

From EP-A-1.543.728 a fatty thickening composition is known, which is suitable for thickening a fat based composition. The thickening composition contains between 15 and 45 wt. % of at least one hydrogenated fat and between 85 and 55 wt. % of at least one liquid oil. The hydrogenated fat is preferably a fully hydrogenated fat with at least 15 wt. % of fatty acids with more than 18 carbon atoms, preferably maximum 22 carbon atoms. The preferred hydrogenated fat is hydrogenated high erucic acid rapeseed oil. According to example 1, cooling of a blend of 25 parts fully hydrogenated high erucic acid rapeseed oil with 75 parts of rapeseed oil gives a solid final product.

All of the above-mentioned patent publications address the problem of providing a structuring fat composition which is low in SAFA, shows an acceptable hardness and is suitable for use in a final product. However, each time this problem is solved by the use of a fat component which contains behenic acid, i.e. long hydrocarbon chain fatty acids as the structuring agent. Behenic acid is mostly obtained using hydrogenation. Triglycerides containing one or more of these fatty acids risk to create a waxy mouth feel upon eating, caused by their high melting point, as can be seen by their high solid fat content at 35°C. To avoid the presence of high melting triglycerides, containing more than one of these long chain fatty acids, chemical or enzymatic interesterification is often applied, followed by fractionation. However, this is a complicated and expensive production method. On top of that, sources of behenic acid are quite expensive, as their availability is quite limited.

EP-A-875.152 relates to lamination fats with improved lamination and structuring properties, in particular a good hardness and low saturated fatty acid content. According to EP-A-875.152 this is achieved by the presence of a minimum amount of triglycerides containing long chain fatty acids, in particular by the presence of a minimum amount of arachidic (A) and behenic (B) acid. The fat blend further comprises 70 - 85 wt. % of a liquid oil and at least 15 wt. % of (H2M+H3) triglycerides, and has a saturated fatty acid content of less than 50 wt. %, a N35 < 35 and an N20 of 15-40 wt. %. H designates saturated fatty acids with at least 16 carbon atoms, M designates saturated fatty acids with 6-14 C atoms. The blend is characterised by a certain minimum Stevens hardness so that it suitable for use in puff pastry. The Stevens hardness of the fat blend, which is the hardness measured at 20°C with a Stevens Texture Analyzer using a cylindrical probe of 4.4 mm diameter, is at least 150g, preferably between 150 and 800g. The SAFA-content of the fat blends disclosed in the examples ranges from 29 to 35.2 %, the solid fat content at 35°C ranges from 10.6 to 23.3%.

Contrary to the above mentioned patent publications, which all disclose to use behenic acid, EP-A-875.152 leaves also the possibility to use fat compositions rich in arachidic acid, which is also a long chain fatty acid. According to EP-A-875.152, behenic and arachidic acid need to be incorporated in trisaturated triglycerides of the (H2M+H3)-type, in particular in H3. EP-A-875.152 does not disclose the presence of triglycerides which contain behenic acid and unsaturated fatty acids.

FR-A-2.435.206 describes a tempering type cocoa butter replacer characterised by a certain content of arachidic acid, combined with a certain proportion of SUU-triglycerides and a maximum limit of PUFA, to render the composition more heat resistant while keeping good melting properties in the mouth. The main triglycerides present in the composition are of the SUS- and SUU-type, whereas the S3, SSU, USU and U3 content is limited. According to FR 2 435 206 the U3 triglyceride content should be limited to maximum 6, preferably maximum 4 mol %, as an excessive amount of U3 causes oil exudation or oil bleeding, given the fact that U3 separates easily from the tissular structure of chocolate at room temperature.

### Object of the invention.

There is thus a need to edible products which at the same time have a low SAFA content, a hard texture - in particular a texture with a higher hardness than can be expected from their SAFA content -and an improved mouthfeel.

It is therefore an object of this invention to provide a structured edible product with a low SAFA content, a hard texture - in particular a texture with a higher hardness than can be expected from their SAFA content - and an improved mouthfeel, as well as a triglyceride composition for producing such a structured product.

### Description of the invention.

This is achieved according to the present invention with a structured edible product showing the technical features of the characterising part of the first claim.

Thereto, the structured, edible product of this invention is characterised in that the edible product contains, expressed on total product basis,
a) between 20 and 100 wt. % of a triglyceride composition
b) between 0 and 80 wt% of a filler material
c) less than 15 wt. % of water
wherein the triglyceride composition contains
d) less than 57 wt. % of saturated fatty acids,
e) less than 10 wt. % of trans unsaturated fatty acids
f) at least 15 wt. % of SUS triglycerides, wherein S is a C16-24 saturated fatty acid, U is unsaturated fatty acid having at least 18 C atoms, which SUS-triglycerides are characterised by a content of C-20 containing SUS-triglycerides of at least 3 %, expressed on the total SUS-triglycerides, where C-20 represents arachidic acid and the ratio of AOSt/AOA triglycerides is at least 1.5, preferably at least 3
g) at least 8 wt. % of U3 triglycerides.

The triglyceride concentrations are given in relation to the weight of the triglyceride composition.

The inventors have observed that triglyceride compositions with a high AOSt/AOA ratio were especially effective in improving both mouthfeel and texture. Simultaneously, the hardness of the product could be improved to a level which is higher than could be expected from the triglyceride fatty acid composition.

In the above, filler material means a non-glyceride edible solid material, preferably present in powdery form.

Within the scope of this invention "structured product" means a product with a structure which does not spontaneously and visually separate into two or more phases at room temperature after less than 24 hours of storage. Within the scope of this invention filler material, is an ingredient that is added on purpose to the edible product of the present invention. The edible product of this invention may contain ingredients which themselves contain an oil or fat, for instance hazelnut paste. In that case the oil present in the hazelnut paste is considered as part of the triglyceride composition, and the fat free part of the hazelnut paste is considered as part of the filler material. It has been observed that the edible product of this invention takes a solid structure, even with only a small part of the triglyceride component in a crystallized form. If so desired, the edible product of this invention may be left some time for stabilization after having been produced, with the purpose of stabilizing the crystallized fat and increasing the hardness of the edible product.

Within the scope of the present invention symmetrical triglycerides, SUS, are triglycerides with a saturated (S) fatty acid in the 1- and 3-position, and an unsaturated (U) fatty acid in the 2-position. Within the scope of this invention, the saturated fatty acids in the 1- and 3- position may be the same or different. For example AOSt, is considered a symmetrical triglyceride. Within the scope of this invention, SSU-triglycerides are considered as asymmetrical triglycerides. Chocolate product, designates products that may respond to the definition given in the Codex Alimentarius Standard, but also products with a scope outside of this definition which can be considered as a chocolate alternative. Examples of such products include, but are not limited to, compound coatings based on vegetable fat products.

The inventors have also found that the structured edible product and triglyceride composition of the present invention are characterised by a texture that is harder than could be expected from the saturated fatty acid content of the product, and harder than the known products with a similar content of saturated and trans fatty acids or a similar solid fat content (SFC) at 20°C.

The inventors have further found that the structured, edible product and triglyceride composition of this invention shows good oil retention capacity and that the expected spontaneous separation of oil from the product at room temperature does not take place, even with edible products in the form of a relatively soft cream. This is surprising since the triglyceride part of the composition has a low to very low saturated fatty acid (SAFA) content and/or a low SFC at 20°C, and therefore the person skilled in the art would never expect obtaining a structured edible product, without spontaneous oil separation occurring at room temperature. Negligible oil loss from the edible product of this invention has been observed as well as a high resistance to oil migration when contacted with other products capable of and/or show a tendency to absorbing oil. An example of such a product capable of absorbing oil is a cream which when contacted with a chocolate shell or when deposited on a biscuit, does not loose a significant part of the liquid oil contained in it. With creams showing a bad oil retention capacity, oil migration would quickly result in softening and blooming of the chocolate shell and a hardening of the cream that lost part of the liquid oil.

Preferably, the structured, edible product and triglyceride composition of this invention contain less than 52 wt. %, preferably less than 47 wt. %, most preferably less than 42 wt. % of saturated fatty acids with respect to the total weight of the fat phase. The presence of arachidic fatty acid as claimed in claim 1 permits minimising the SAFA content for nutritional reasons, while still maintaining the hard texture for the envisaged applications.

It is preferred to adjust the C-20 and C-22 fatty acid content of the SUS triglycerides in such a way that C-20/C-22 ratio is at least 0.7, preferably at least 1, wherein C-22 designates behenic acid. Symmetrical triglycerides containing C-20 proved to be more effective than C-22 containing ones, in terms of improving texture and mouthfeel.

In the structured edible product and triglyceride composition of this invention, preferably at least 5 wt. %, preferably at least 7 wt. %, more preferably at least 10 wt. % of the SUS triglycerides are SUS-triglycerides, which contain saturated C-20 fatty acids with the purpose of increasing the hardness of the texture.

The content of asymmetrical triglycerides of the structured product and triglyceride composition of this invention is minimised as they were found to have a negative impact on the texture. Therefore, the SUS and SSU-triglyceride content of the edible product of this invention is adjusted such that the SUS/SSU ratio is at least 1.

The triglyceride composition preferably contains U3 and SU2 triglycerides in such an amount that the ratio U3/SU2 is at least 0.5, preferably at least 1, most preferably at least 1.5.

According to a further preferred embodiment, the edible product of this invention contains
- between 20 and 95 wt. % of a triglyceride composition, preferably between 25 and 60 wt. %, more preferably between 30 and 50 wt. %
- between 5 and 80 wt. % of a filler material, preferably between 75 and 40 wt. %, more preferably between 70 and 50 wt. %,
since chocolate products are preferred edible products of this invention.

Preferred edible products according to this invention are fat continuous products. In products with a fat continuous structure, fat can be really the controlling factor which permits providing products with a low SAFA content and yet a hard texture. Within the scope of this invention, fat continuous products are understood to designate products in which the continuous phase is formed by the fat. Examples of such fat continuous products are chocolate fillings and spreads. Baked products or french fries are not to be considered as fat continuous products, as the continuous phase of these products is not formed by the fat.

The food product of this invention preferably contains less than 5 wt. % of water with respect to the total weight of the food product, preferably less than 2 wt. %. The presence of large amounts of water, like in margarines, leads to different food systems such as for example oil in water emulsions, where stabilisation of the emulsion is achieved by the incorporation of purposively selected additives or ingredients and processing techniques.

The edible product of the present invention preferably is not an emulsion, in particular not a W/O emulsion. W/O emulsions like margarines, obtain their structure by specific emulsification and solidification techniques, by the use of emulsifiers and thickening agents. As a consequence, they have a different structure as the edible product of the present invention. The product of this invention does not need to be subjected to such techniques to obtain its structure.

Preferably the edible product and triglyceride composition of this invention comprise at least one hard or semi hard fat component and at least one liquid oil or a mixture of two or more liquid oils. The at least one hard or semi-hard fat is a fat which is a solid or semi-solid fat at room temperature, preferably with a melting point of at least 25°C. With semi-solid fat is meant a fat that at room temperature contains a visible part of solid fat and a visible part of liquid oil. The at least one liquid oil is an oil which is liquid at room temperature.

Preferably, the triglyceride composition and edible product of this invention are characterised in that the amount of the at least one hard or semi-hard fat with respect to the weight of the triglyceride composition ranges from 10-90 wt. %, preferably from 25-75 wt. %, and in that the amount of the at least one liquid oil ranges from 10-90 wt. %, preferably from wt. 75-25 wt. %, with respect to the weight of the triglyceride composition. The amounts of the at least one hard or semi-hard fat and liquid oil may vary depending on the hardness of the hard or semi-hard fat used as well as the envisaged hardness of the final edible product.

If a liquid oil is chosen as liquid component or part of the liquid component, then preferably this liquid oil will be a vegetable oil selected from the group of rapeseed oil, corn oil, soy oil, sunflowerseed oil, cotton seed oil, maize oil, olive oil, hazelnut oil, groundnut oil, liquid fractions of palm oil or shea butter, a blend of two or more of the afore mentioned oils and fractions thereof. This also includes varieties of afore mentioned oils, like for instance high oleic sunflower oil.

Through purposive selection of the liquid oils, the mono unsaturated fatty acids (MUFA) / polyunsaturated fatty acids (PUFA) ratio may be optimised to fulfil specific diet requirements.

As hard or semi-hard fat, a fat will be preferably used which contains at least 7% sal fat or fractions of sal fat, sal stearin being particularly preferred as it contains high amounts of arachidic fatty acid.

The triglyceride composition is substantially free of hydrogenated fat components. Hydrogenation of liquid oils or semi-liquid oils is a well known technique for producing hard fats. However, hydrogenation increases the amount of saturated fatty acids in the fat composition and in case of partial hydrogenation, trans fatty acids are built, which also give negative health effects.

Hydrogenation of liquid oils or semi-liquid oils is generally considered as a technique for producing hard fats. However, hydrogenation increases the amount of saturated fatty acids and in case of partial hydrogenation trans fatty acids are built which also give negative health effects. Although the edible product of the present invention may contain hydrogenated oils or fats, it is preferred to minimise their use. Therefore, the present invention tends to minimise the use of hydrogenated products in the triglyceride composition, and to use triglyceride compositions which are substantially free of hydrogenated fat components.

The filler material comprises at least one component selected from the group consisting of sugar, sweetener, flour, starch, skimmed milk powder, whole milk powder, whey powder, lactose, dextrose, cocoa powder, coffee powder, a cellulose material, food grade organic solid powders, food grade inorganic solid powders or a blend of two or more of these.

The structured edible product of this invention may further contain an amount of dry ingredients, wherein the amount of dry ingredients with a particle size of less than 15 µm is more than 30 wt. %, preferably more than 50 wt. %, more preferably more than 70 wt. % with respect to the total amount of dry ingredients present in the food product, expressed on fat free basis.

Within the scope of this invention the structured, edible food product is selected from the group of confectionery compositions, in particular a cream, a coating, a tablet, a filling, a filled chocolate product, a non-emulsified spread, a whipping cream, a culinary product, solid fat ingredients for food products, soft cheese.

The present invention also relates to a triglyceride composition for the production of the above described structured, edible product. Thereto, the triglyceride composition contains with respect to its total weight
a) less than 57 wt. % of saturated fatty acids,
b) less than 10 wt. % of trans unsaturated fatty acids,
c) at least 15 wt. % of SUS triglycerides, wherein S is a C16-24 saturated fatty acid, U is unsaturated fatty acid having at least 18 C atoms, which SUS-triglycerides are characterised by a content of saturated C-20 containing SUS-triglycerides of at least 3 wt. %, expressed on the total SUS-triglycerides, where C-20 stands for arachidic acid and whereby the ratio of AOSt/AOA triglycerides is at least 1.5, preferably at least 3,
d) at least 8 wt. % of U3 triglycerides.

Preferably the U3 and SU2 triglycerides are present in such an amount that the ratio U3/SU2 is at least 0.5, preferably at least 1, most preferably at least 1.5. Preferably the SUS/SSU ratio is at least 1. The triglyceride composition preferably shows the technical features discribed above.

The present invention further relates to a process for producing the above described structured edible product, which comprises the steps of blending (a) 20-100 wt. % of a triglyceride composition in an at least partly molten form, with (b) 0-80 wt. % of a filler material and (c) less than 15 wt. % of water; and of inducing crystallisation of the triglyceride composition into a stable crystalline form and building of a solid structure.

The present invention also relates to the use of the above described triglyceride composition for the production of a food product chosen from the group of confectionery compositions, in particular a cream, a coating, a tablet, a filling, a filled chocolate product, a whipping cream, a biscuit coated with a cream layer wherein the cream layer as such may be further coated with a coating or not, a biscuit having a cream layer sandwiched between two or more biscuits, non-emulsified spreads, culinary products, solid fat ingredients for food products, soft cheese, extruded products with an interior structured filling, baked products with a structured filling.

The present invention not only relates to structured food products, but also to structured non-food products containing the above-described triglyceride composition, where the presence of a high amount of liquid oil and a relatively hard structure needs to be combined, for example in applications such as cosmetic and pharmaceutical products for topical use, for example ointments gels, lotions, creams, spot on products etc, but also for use on hair such as for example nutritive creams, shampoo, gel etc.

The present invention is further elucidated in the examples and comparative examples.

### Examples.

### Example. 1.

A fat composition (sample 1) was prepared by mixing 50 wt. % sal stearine with an IV of 31.6, 18 wt. % of an enzymatically prepared StOSt fat with an IV of 32.5 and 32 wt. % of high oleic sunflower.

The fatty acid and triglyceride composition of sample 1 is summarised in table 1 below.

### Comparative example A.

A fat composition (sample A) was prepared by mixing 70 wt. % of an enzymatically prepared StOSt fat with an IV of 32.5 and 30 wt. % of high oleic sunflower oil.

The fatty acid and triglyceride composition of sample A is summarised in table 1 below.

**Table 1.**

| | sample 1 | sample A |
|---|---|---|
| FAC | | |
| C16 | 4,40 | 5,20 |
| C18 | 36,10 | 39,00 |
| C18-1 | 50,10 | 50,60 |
| C18-2 | 3,50 | 4,00 |
| C18-3 | 0,10 | 0,00 |
| C20 | 4,5 | 0,3 |
| C20-1 | 0,1 | 0,1 |
| C22 | 0,7 | 0,5 |
| SAFA | 45,9 | 45,3 |
| | | |

| HPLC | | |
|---|---|---|
| POP | 1,00 | 1,70 |
| POSt | 6,00 | 4,90 |
| StOSt | 38,00 | 43,20 |
| AOSt | 8,3 | 0,90 |
| AOA | 1,5 | 1,00 |
| BOSt | 0,3 | 0,3 |
| BOB | 0 | 0 |
| SUS | 56,30 | 53,50 |
| U3 | 23 | 25,2 |
| U3/SU2 | 2,2 | 1,8 |

### Example 2.

Using sample 1 and sample A, chocolate tablets 1 and A were respectively made according to the recipe of table 2

**Table 2.**

| | |
|---|---|
| Cocao powder | 15% |
| sugar | 45% |
| dextrose | 5% |
| fat | 35% |
| lecithin | 0,50% |

The chocolate products were made by first blending the dry ingredients with part of the triglyceride composition, followed by roll refining and treating the mixture in a conche at 50°C where the residual fat and the lecithin was added and mixed into the blend. The thus obtained chocolate mass was tempered by cooling and adding 0.2% of Chocoseed. Chocoseed is a product of Fuji Oil containing a minimum working amount of SUS-triglyceride, crystallised in the Beta-form.

The chocolate mass was poured in moulds to make tablets and cooled for 30 minutes at 10°C and 30 minutes at 15°C, followed by de-moulding. All tablets were glossy and de-moulding could be carried out without problems, indicating that the chocolate products were well tempered. The tablets were stored for 1 week at 20°C to stabilise. The thickness of the tablets was 7 mm.

After 1 week the hardness of the tablets was measured at 20°C with an SMS-texture meter, using a probe of 3 mm diameter, speed 0.5 mm/sec. To measure the texture, the tablets were put on a metal ring of 8 mm height, so that the bottom of the tablet, at the area where the probe penetrates, did not touch the surface of the measuring table of the instrument. The texture corresponds to the maximum resistance measured before cracking or full penetration of the tablet by the probe. The results obtained are given in table 3.

**Table 3.**

| | tablet 1 | tablet A |
|---|---|---|
| Hardness | 4035 | 3696 |

The tablets were put for 3 hours on a sheet of paper in a room at 23°C, after which the paper was controlled for traces of oil absorption, but none could be detected.

After two weeks storage, the tablets were compared in a sensory evaluation by a taste panel of 8 persons. They were asked to give a score from 0 to 5 for hardness and snap as well as for melting properties in the mouth and to indicate which product they preferred. The average results were as follows :

**Table 4.**

| | tablet 1 | tablet A |
|---|---|---|
| snap | 2,3 | 1,7 |
| hardness | 3,3 | 2,9 |
| mouthfeel | 3,3 | 1,9 |
| preference | 8x | |

As can be seen from this experiment, the sample prepared with the sal stearine, containing the higher amounts of C-20 showed the best properties both in hardness and snap as well as to melting properties in the mouth. The panel made the remark that the product prepared with fat sample A gave a clearly more waxy feeling in the mouth, which was not the case for sample 1.

### Comparative Example B.

A fat sample B was prepared and evaluated in a recipe for a white chocolate product. Sample B is a fat consisting of 70 wt. % of an enzymatically prepared StOSt fat with an IV of 32.5 and a high oleic sunflower content of 30 wt. %. Fat B has a SAFA content of 45.3 wt. % and contains 0.3 wt. % of C-20.

### Example 3.

A fat sample 3 was prepared and evaluated in a recipe for a white Chocolate Product. Sample 3 is a fat consisting of 10 wt. % sal stearine with an IV of 31.6, 59 wt. % of an enzymatically prepared StOSt fat with an IV of 32.5 and 31 wt. % of high oleic sunflower. Fat sample 3 has a SAFA content of 45.7 wt. % and contains 1.1 wt. % of C-20.

### Example 4.

With the fat samples of example 3 and Comparative Example B, chocolate products, in particular tablets, were made according to following recipe:

**Table 5.**

| | |
|---|---|
| Skimmed milk powder | 18% |
| sugar | 45% |
| fat | 37% |
| lecithin | 0,10% |

The chocolate products were prepared as described in example 2. Tablets made with the two fats were evaluated after one week by a taste panel and the hardness was measured with a texture meter. The results were as follows:

**Table 6.**

| | tablet B | tablet 3 |
|---|---|---|
| Hardness | 3726 | 3855 |

As can be seen from this table, fat sample 3, although it contained only 10 wt. % of sal stearine, gave a chocolate product with a better hardness than the comparative example. The taste panel considered both products as fully acceptable in terms of hardness, compared to traditional products containing high amounts of saturated fat and or trans fatty acids, however, in terms of melting behaviour in the mouth, all panel members preferred tablet 3.

### Example 5.

A fat composition (sample 4) was prepared by mixing 61 wt. % sal stearine and 39 wt. % of high oleic sunflower.

The fatty acid and triglyceride composition of sample 4 is summarised in table 7 below.

### Comparative example C.

A fat composition (sample C) was prepared by mixing 52 wt. % of an enzymatically prepared StOSt fat, 15% of an enzymatically prepared BOB fat and 33 wt. % of high oleic sunflower oil.

The fatty acid and triglyceride composition of sample C is summarised in table 7 below.

**Table 7.**

| | sample 4 | sample C |
|---|---|---|
| FAC | | |
| C16 | 5,0 | 4,1 |
| C18 | 31,5 | 31,3 |
| C18-1 | 54,3 | 53,2 |
| C18-2 | 3,4 | 4,0 |
| C18-3 | 0,1 | 0,0 |
| C20 | 4,7 | 0,8 |
| C20-1 | 0,1 | 0,1 |
| C22 | 0,5 | 6,2 |
| SAFA | 42,0 | 42,6 |
| TransFA | 0,1 | 0,6 |

| HPLC | | |
|---|---|---|
| POP | 0,8 | 0,9 |
| POSt | 6,1 | 4,0 |
| StOSt | 33 | 33,6 |
| AOSt | 10,1 | 0,9 |
| AOA | 1,4 | 1,6 |
| BOSt | 0,3 | 1,6 |
| BOB | 0 | 9,1 |

### Example 6.

Using sample 4 and sample C, chocolate tablets were made according to the recipe in table 8

**Table 8.**

| | |
|---|---|
| Cocao powder | 15% |
| sugar | 45% |
| dextrose | 5% |
| fat | 35% |
| lecithin | 0,50% |

The chocolate products were prepared as described in example 2. For sample C, a BOB-type seeding agent was used. After 4 weeks the hardness of the tablets was measured at 20°C with an SMS-texture meter. The results obtained are given in table 9.

**Table 9.**

| | tablet 4 | tablet C |
|---|---|---|
| Hardness | 3383 | 3108 |

After 4 weeks storage, the tablets were compared in a sensory evaluation by a taste panel of 8 persons. They were asked to give a score from 0 to 5 for hardness and snap as well as for melting properties in the mouth and to indicate which product they preferred. The average results were as follows :

**Table 10.**

| | tablet 4 | tablet C |
|---|---|---|
| snap | 2,5 | 1,1 |
| hardness | 3,4 | 2,5 |
| mouthfeel | 3,4 | 2,0 |
| preference | 8x | |

As can be seen from this experiment, the sample prepared with the salstearine, containing the higher amounts of C-20 showed the best properties both in hardness and snap as well as to melting properties in the mouth. The panel made the remark that the product prepared with fat sample C gave a clearly more waxy feeling in the mouth, which was not the case for sample 4. Although sample C contained an important amount of C-22, which is a long chain saturated fatty acid, this gave no improvement in hardness, on the contrary it weakened the structure.

### Example 7.

A milk chocolate product was prepared by using a fat consisting of 30 wt. % sal stearine with an IV of 31.6, 39 wt. % of an enzymatically prepared StOSt fat with an IV of 32.5, 21.7% of rapeseedoil and 9.3 wt. % of sunfloweroil and applying this fat in the following recipe.

**Table 11.**

| | |
|---|---|
| Cocao powder | 10% |
| sugar | 45% |
| fat | 33% |
| Full Milk Powder | 5% |
| Skimmed Milk Powder | 7% |
| lecithin | 0,40% |

The preparation of the chocolate product was carried out according to the procedure described in example 2. The SAFA-level of the final product, expressed on total fat was 46.6 wt. %. After 4 weeks the hardness of the tablet was measured at 20°C with an SMS-texture meter and a hardness was found of 3577 g The tablets were assesed in a sensory evaluation by a taste panel of 8 persons, and they found that the milk chocolate product, in terms of hardness, mouthfeel and taste, was very close to the traditional milk chocolate.

## Claims

1. A structured, edible product, wherein the edible product contains, expressed on total product basis,
a) between 20 and 100 wt. % of a triglyceride composition
b) between 0 and 80 wt. % of a filler material
c) less than 15 wt. % of water
wherein the triglyceride composition contains with respect to the weight of the triglyceride composition
d) less than 57 wt. % of saturated fatty acids,
e) less than 10 wt. % of trans unsaturated fatty acids
f) at least 15 wt. % of SUS triglycerides, wherein S is a C16-24 saturated fatty acid, U is unsaturated fatty acid having at least 18 C atoms, which SUS-triglycerides are **characterised by** a content of C-20 arachidic acid containing SUS-triglycerides of at least 3 wt. % expressed on the total SUS-triglyceride weight and the AOSt/AOA triglyceride ratio is at least 1.5, preferably at least 3,
g) at least 8 wt. % of U3 triglycerides.

2. A structured, edible product, as claimed in claim 1, **characterised in that** the product contains less than 52 wt. %, preferably less than 47 wt. %, most preferably less than 42 wt. % of saturated fatty acids with respect to the total weight of the fat phase.

3. A structured, edible product, as claimed in claim 1 or 2, **characterised in that** the SUS-triglycerides have a content of saturated C-20 and C-22 fatty acids in a ratio C-20/C-22 of at least 0.7, preferably at least 1, where C-22 is behenic acid.

4. A structured, edible product, as claimed in any one of claims 1-3, **characterised in that** the SUS-triglycerides have a content of saturated C-20 containing SUS-triglycerides of at least wt. 5 %, preferably at least 7 wt. % , more preferably at least 10 wt. %.

5. Structured, edible product, as claimed in any one of claims 1-4, **characterised in that** the SUS/SSU ratio of the triglyceride composition is at least 1.

6. Structured edible product according to any one of claims 1-5, **characterised in that** the triglyceride composition contains U3 and SU2 triglycerides in such an amount that the ratio U3/SU2 is at least 0.5, preferably at least 1, most preferably at least 1.5.

7. Structured, edible product according to any one of claims 1-6, **characterised in that** the edible product contains
- between 20 and 95 wt. % of a triglyceride composition, preferably between 25 and 60 wt.%, more preferably between 30 and 50 wt. %
- between 5 and 80 wt. % of a filler material, preferably between 75 and 40 wt. %, more preferably between 70 and 50 wt. %.

8. Structured, edible product according to any one of claims 1-7, **characterised in that** the product is a fat continuous product.

9. A Structured, edible product according to any one of claims 1-8, **characterised in that** the food product contains less than 5 wt. % of water with respect to the total weight of the food product, preferably less than 2 wt. %.

10. A structured, edible product according to any one of claims 1-9, **characterised in that** the product is not an emulsion, in particular not a W/O emulsion.

11. A Structured, edible product as claimed in any one of claims 1-10, **characterised in that** the triglyceride composition comprises at least one hard or semi hard fat component and at least one liquid oil or a blend of two or more liquid oils, the at least one hard or semi-hard fat being a fat which is solid or semi-solid at room temperature and the at least one liquid oil being liquid at room temperature.

12. A structured, edible product as claimed in any one of claims 1-11, **characterised in that** the amount of the at least one hard or semi-hard fat with respect to the weight of the triglyceride composition ranges from 10-90 wt. %, preferably from 25-75 wt. % and **in that** the amount of the at least one liquid oil ranges from 10-90 wt. %, preferably from wt. 75-25 %, with respect to the weight of the triglyceride composition.

13. A structured, edible product as claimed in any one of claims 1-12, **characterised in that** the at least one liquid oil comprises at least one vegetable oil selected from the group of rapeseed oil, corn oil, soy oil, sunflower seed oil, high oleic sunflower oil, cotton seed oil, maize oil, olive oil, hazelnut oil, groundnut oil, liquid fractions of palm oil or shea butter, a fraction of one of these liquid oils or a blend of two or more of the afore mentioned oils and/or fractions thereof.

14. A structured, edible product as claimed in any one of claims 1-13, **characterised in that** the hard fat or semi-hard contains at least 7% sal fat or one or more fractions of sal fat.

15. A structured, edible product as claimed in any one of claims 1-14, **characterised in that** the triglyceride composition is substantially free of hydrogenated fat components.

16. A Structured, edible product as claimed in any one of claims 1-15, **characterised in that** the filler material comprises at least one component selected from the group consisting of sugar, sweetener, flour, starch, skimmed milk powder, whole milk powder, whey powder, lactose, dextrose, cocoa powder, coffee powder, a cellulose material, food grade organic solid powders, food grade inorganic solid powders or a blend of two or more of these.

17. A structured, edible product as claimed in any one of claims 1-16, **characterised in that** the food product contains an amount of dry ingredients, wherein the amount of dry ingredients with a particle size of less than 15 µm is more than 30 wt. %, preferably more than 50 wt. %, more preferably more than 70 wt. % with respect to the total amount of dry ingredients present in the food product, expressed on fat free basis.

18. A Structured, edible product as claimed in any one of claims 1-17, **characterised in that** the edible food product is selected from the group of confectionery compositions, in particular a cream, a coating, a tablet, a filling, a filled chocolate product, a non-emulsified spread, a whipping cream, a culinary product, solid fat ingredients for food products, soft cheese

19. Triglyceride composition for the production of a structured, edible product as claimed in any one of claims 1-18, **characterised in that** the triglyceride composition contains with respect to the weight of the triglyceride composition
a) less than 57 wt. % of saturated fatty acids,
b) less than 10 wt. % of trans unsaturated fatty acids,
c) at least 15 wt. % of SUS triglycerides, wherein S is a C16-24 saturated fatty acid, U is unsaturated fatty acid having at least 18 C atoms, which SUS-triglycerides are **characterised by** a content of saturated C-20 containing SUS-triglycerides of at least 3 wt. %, expressed on the total SUS-triglycerides, where C-20 stands for arachidic acid and whereby the ratio of AOSt/AOA triglycerides is at least 1.5, preferably at least 3,
d) at least 8 wt. % of U3 triglycerides.

20. Triglyceride composition as claimed in claim 19, **characterised in that** the triglyceride composition contains U3 and SU2 triglycerides in such an amount that the ratio U3/SU2 is at least 0.5, preferably at least 1, most preferably at least 1.5.

21. A triglyceride composition as claimed in claim 19 or 20, **characterised in that** the SUS-triglycerides have a content of saturated C-20 and C-22 fatty acids in a ratio C-20/C-22 of at least 0.7, preferably at least 1, where C-22 is behenic acid.

22. A triglyceride composition as claimed in any one of claims 19 to 21, **characterised in that** the SUS-triglycerides have a content of saturated C-20 containing SUS-triglycerides of at least wt. 5 %, preferably at least 7 wt. % , more preferably at least 10 wt. %.

23. A triglyceride composition as claimed in any one of claims 19-22, **characterised in that** the SUS/SSU ratio of the triglyceride composition is at least 1.

24. A triglyceride composition as claimed in any one of claims 19-23, **characterised in that** the triglyceride composition comprises at least one hard or semi hard fat component and at least one liquid oil or a blend of two or more liquid oils, the at least one hard or semi-hard fat being a fat which is solid or semi-solid at room temperature and the at least one liquid oil being liquid at room temperature.

25. A triglyceride composition as claimed in any one of claims 19-24, **characterised in that** the amount of the at least one hard or semi-hard fat with respect to the weight of the triglyceride composition ranges from 10-90 wt. %, preferably from 25-75 wt. % and **in that** the amount of the at least one liquid oil ranges from 10-90 wt. %, preferably from wt. 75-25 %, with respect to the weight of the triglyceride composition.

26. A triglyceride composition as claimed in any one of claims 19-25, **characterised in that** the at least one liquid oil comprises at least one vegetable oil selected from the group of rapeseed oil, corn oil, soy oil,
sunflower seed oil, high oleic sunflower oil, cotton seed oil, maize oil, olive oil, hazelnut oil, groundnut oil, liquid fractions of palm oil or shea butter, a fraction of one of these liquid oils or a blend of two or more of the afore mentioned oils and/or fractions thereof.

27. A triglyceride composition as claimed in any one of claims 19-26, **characterised in that** the hard fat or semi-hard contains sal fat or one or more fractions of sal fat.

28. A triglyceride composition as claimed in any one of claims 19-27, **characterised in that** the triglyceride composition is substantially free of hydrogenated fat components.

29. A process for producing the structured, edible product as claimed in any one of claims 1-18, **characterised in that** the process comprises the steps of blending (a) 20-100 wt. % of a triglyceride composition in an at least partly molten form; (b) 0-80 wt. % of a filler material and (c) less then 15 wt. % of water, all wt. % being expressed in relation to the total weight of the edible product, and the step of inducing crystallisation of the triglyceride composition into a stable crystalline form and building of a solid structure.

30. Use of the triglyceride composition of any one of claims 19-28 for the production of a food product from the group consisting of confectionery compositions, in particular a cream, a coating, a tablet, a filling, a filled chocolate product, a whipping cream, a biscuit coated with a cream layer wherein the cream layer as such may be further coated with a coating or not, a biscuit having a cream layer sandwiched between two or more biscuits, non-emulsified spreads, culinary products, solid fat ingredients for food products, soft cheese, extruded products with an interior structured filling, baked products with a structured filling.

## Patentansprüche

1. Texturiertes Speiseprodukt, wobei das Speiseprodukt Folgendes enthält, auf Gesamptproduktbasis ausgedrückt:
a) zwischen 20 und 100 Gew.-% einer Triglyceridzusammensetzung
b) zwischen 0 und 80 Gew.-% eines Füllstoffmaterials
c) weniger als 15 Gew.-% Wasser
wobei die Triglyceridzusammensetzung mit Bezug auf das Gewicht der Triglyceridzusammensetzung Folgendes enthält
d) weniger als 57 Gew.-% gesättigte Fettsäuren
e) weniger als 10 Gew.-% transungesättigte Fettsäuren
f) mindestens 15 Gew.-% SUS-Triglyceride, wobei S eine gesättigte C16-24-Fettsäure ist, U ungesättigte Fettsäure ist, die mindestens 18 C-Atome aufweist, wobei die SUS-Triglyceride durch einen Gehalt an C-20-Arachidonsäure enthaltenden SUS-Triglyceriden von mindestens 3 Gew.-%, auf der Basis des Gesamt-SUS-Triglyceridgewichts ausgedrückt, **gekennzeichnet** sind, und das AOSt/AOA-Triglycerid-Verhältnis mindestens 1,5, bevorzugt mindestens 3 beträgt,
g) mindestens 8 Gew.-% U3-Triglyceride.

2. Texturiertes Speiseprodukt nach Anspruch 1, **dadurch gekennzeichnet, dass** das Produkt weniger als 52 Gew.-%, bevorzugt weniger als 47 Gew.-%, am bevorzugtesten weniger als 42 Gew.-% gesättigte Fettsäuren, mit Bezug auf das Gesamtgewicht der Fettphase, enthält.

3. Texturiertes Speiseprodukt nach Anspruch 1 oder 2, **dadurch gekennzeichnet, dass** die SUS-Triglyceride einen Gehalt an gesättigten C-20- und C-22-Fettsäuren in einem Verhältnis von C-20/C-22 von mindestens 0,7, bevorzugt mindestens 1, aufweisen, wobei C-22 Behensäure ist.

4. Texturiertes Speiseprodukt nach einem der Ansprüche 1 - 3, **dadurch gekennzeichnet, dass** die SUS-Triglyceride einen Gehalt an gesättigten, C-20 enthaltenden SUS-Triglyceriden von mindestens 5 Gew.-%, bevorzugt mindestens 7 Gew.-%, noch bevorzugter mindestens 10 Gew.-% aufweisen.

5. Texturiertes Speiseprodukt nach einem der Ansprüche 1 - 4, **dadurch gekennzeichnet, dass** das SUS/SSU-Verhältnis der Triglyceridzusammensetzung mindestens 1 beträgt.

6. Texturiertes Speiseprodukt nach einem der Ansprüche 1 - 5, **dadurch gekennzeichnet, dass** die Triglyceridzusammensetzung U3- und SU2-Triglyceride in einer derartigen Menge enthält, dass das Verhältnis von U3/SU2 mindestens 0,5, bevorzugt mindestens 1, am bevorzugtesten mindestens 1,5 beträgt.

7. Texturiertes Speiseprodukt nach einem der Ansprüche 1 - 6, **dadurch gekennzeichnet, dass** das Speiseprodukt Folgendes enthält:
- zwischen 20 und 95 Gew.-% einer Triglyceridzusammensetzung, bevorzugt zwischen 25 und 60 Gew.-%, noch bevorzugter zwischen 30 und 50 Gew.-%
- zwischen 5 und 80 Gew.-% eines Füllstoffmaterials, bevorzugt zwischen 75 und 40 Gew.-%, noch bevorzugter zwischen 70 und 50 Gew.-%.

8. Texturiertes Speiseprodukt nach einem der Ansprüche 1 - 7, **dadurch gekennzeichnet, dass** das Produkt ein fettkontinuierliches Produkt ist.

9. Texturiertes Speiseprodukt nach einem der Ansprüche 1 - 8, **dadurch gekennzeichnet, dass** das Speiseprodukt weniger als 5 Gew.-% Wasser, auf das Gesamtgewicht des Speiseprodukts bezogen, bevorzugt weniger als 2 Gew.-% enthält.

10. Texturiertes Speiseprodukt nach einem der Ansprüche 1 - 9, **dadurch gekennzeichnet, dass** das Produkt keine Emulsion, insbesondere keine W/Ö-Emulsion ist.

11. Texturiertes Speiseprodukt nach einem der Ansprüche 1 - 10, **dadurch gekennzeichnet, dass** die Triglyceridzusammensetzung mindestens eine harte oder halbharte Fettkomponente und mindestens ein flüssiges Öl oder eine Mischung von zwei oder mehreren flüssigen Ölen umfasst, wobei das mindestens eine harte oder halbharte Fett ein Fett ist, das bei Raumtemperatur fest oder halbfest ist und das mindestens eine flüssige Öl bei Raumtemperatur flüssig ist.

12. Texturiertes Speiseprodukt nach einem der Ansprüche 1 - 11, **dadurch gekennzeichnet, dass** die Menge des mindestens einen harten oder halbharten Fetts mit Bezug auf das Gewicht der Triglyceridzusammensetzung im Bereich von 10 - 90 Gew.-%, bevorzugt 25 - 75 Gew.-% liegt und dass die Menge des mindestens einen flüssigen Öls im Bereich von 10 - 90 Gew.-%, bevorzugt 75 - 25 Gew.-%, mit Bezug auf das Gewicht der Triglyceridzusammensetzung, liegt.

13. Texturiertes Speiseprodukt nach einem der Ansprüche 1 - 12, **dadurch gekennzeichnet, dass** das mindestens eine flüssige Öl mindestens ein Speiseöl umfasst ausgewählt aus der Gruppe bestehend aus Rapsöl, Maisöl, Sojaöl, Sonnenblumenöl, Sonnenblumenöl mit hohem Ölsäuregehalt, Baumwollsamenöl, Maisöl, Olivenöl, Haselnussöl, Erdnussöl, flüssigen Anteilen von Palmöl oder Sheabutter, einem Anteil eines dieser flüssigen Öle oder einer Mischung von zwei oder mehreren der oben erwähnten Öle und/oder Anteilen davon.

14. Texturiertes Speiseprodukt nach einem der Ansprüche 1 - 13, **dadurch gekennzeichnet, dass** das harte oder halbharte Fett mindestens 7 % Sal-Fett oder einen oder mehrere Anteile von Sal-Fett enthält.

15. Texturiertes Speiseprodukt nach einem der Ansprüche 1 - 14, **dadurch gekennzeichnet, dass** die Triglyceridzusammensetzung im Wesentlichen von gehärteten Fettkomponenten frei ist.

16. Texturiertes Speiseprodukt nach einem der Ansprüche 1 - 15, **dadurch gekennzeichnet, dass** das Füllstoffmaterial mindestens eine Komponente umfasst ausgewählt aus der Gruppe bestehend aus Zucker, Süßungsmittel, Mehl, Stärke, Magermilchpulver, Vollmilchpulver, Molkepulver, Laktose, Dextrose, Kakaopulver, Kaffeepulver, einem Cellulosematerial, organischen festen Pulvern von Nahrungsmittelqualität, anorganischen festen Pulvern von Nahrungsmittelqualität oder einer Mischung von zwei oder mehreren derselben.

17. Texturiertes Speiseprodukt nach einem der Ansprüche 1 - 16, **dadurch gekennzeichnet, dass** das Speiseprodukt eine Menge an trockenen Bestandteilen enthält, wobei die Menge trockener Bestandteile mit einer Teilchengröße geringer als 15 µm mehr als 30 Gew.-%, bevorzugt mehr als 50 Gew.-%, noch bevorzugter mehr als 70 Gew.-%, auf die Gesamtmenge trockener Bestandteile in dem Speiseprodukt bezogen" auf fettfreier Basis ausgedrückt, vorliegt.

18. Texturiertes Speiseprodukt nach einem der Ansprüche 1 - 17, **dadurch gekennzeichnet, dass** das Speiseprodukt aus der Gruppe von Zuckerbäckereizusammensetzungen, insbesondere einer Creme, einer Beschichtung, einer Tablette, einer Füllung, einem gefüllten Schokoladeprodukt, einem nichtemulgierten Aufstrich, einer Schlagsahne, einem kulinarischen Produkt, festen Fettbestandteilen für Speiseprodukte, Weichkäse ausgewählt wird.

19. Triglyceridzusammensetzung für die Herstellung eines texturierten Speiseprodukts nach einem der Ansprüche 1 - 18, **dadurch gekennzeichnet, dass** die Triglyceridzusammensetzung Folgendes, mit Bezug auf das Gewicht der Triglyceridzusammensetzung, enthält
a) weniger als 57 Gew.-% gesättigte Fettsäuren
b) weniger als 10 Gew.-% transungesättigte Fettsäuren
c) mindestens 15 Gew.-% SUS-Triglyceride, wobei S eine gesättigte C16-24-Fettsäure ist, U ungesättigte Fettsäure ist, die mindestens 18 C-Atome aufweist, wobei die SUS-Triglyceride durch einen Gehalt an gesättigten C-20 enthaltenden SUS-Triglyceriden von mindestens 3 Gew.-%, auf der Basis der gesamten SUS-Triglyceride ausgedrückt, **gekennzeichnet** sind, wobei C-20 für Arachidonsäure steht und wobei das Verhältnis von AOSt/AOA-Triglyceriden mindestens 1,5, bevorzugt mindestens 3, beträgt,
d) mindestens 8 Gew.-% U3-Triglyceride.

20. Triglyceridzusammensetzung nach Anspruch 19, **dadurch gekennzeichnet, dass** die Triglyceridzusammensetzung U3- und SU2-Triglyceride in einer derartigen Menge enthält, dass das Verhältnis von U3/SU2 mindestens 0,5, bevorzugt mindestens 1, am bevorzugtesten mindestens 1,5 beträgt.

21. Triglyceridzusammensetzung nach Anspruch 19 oder 20, **dadurch gekennzeichnet, dass** die SUS-Triglyceride einen Gehalt an gesättigten C-20- und C-22-Fettsäuren in einem Verhältnis von C-20/C-22 von mindestens 0,7, bevorzugt mindestens 1, aufweisen, wobei C-22 Behensäure ist.

22. Triglyceridzusammensetzung nach einem der Ansprüche 19 bis 21, **dadurch gekennzeichnet, dass** die SUS-Triglyceride einen Gehalt an gesättigten, C-20 enthaltenden SUS-Triglyceriden von mindestens 5 Gew.-%, bevorzugt mindestens 7 Gew.-%, noch bevorzugter mindestens 10 Gew.-% aufweisen.

23. Triglyceridzusammensetzung nach einem der Ansprüche 19 - 22, **dadurch gekennzeichnet, dass** das SUS/SSU-Verhältnis der Triglyceridzusammensetzung mindestens 1 beträgt.

24. Triglyceridzusammensetzung nach einem der Ansprüche 19 - 23, **dadurch gekennzeichnet, dass** die Triglyceridzusammensetzung mindestens eine harte oder halbharte Fettkomponente und mindestens ein flüssiges Öl oder eine Mischung von zwei oder mehreren flüssigen Ölen umfasst, wobei das mindestens eine harte oder halbharte Fett ein Fett ist, das bei Raumtemperatur fest oder halbfest ist und das mindestens eine flüssige Öl bei Raumtemperatur flüssig ist.

25. Triglyceridzusammensetzung nach einem der Ansprüche 19 - 24, **dadurch gekennzeichnet, dass** die Menge des mindestens einen harten oder halbharten Fetts mit Bezug auf das Gewicht der Triglyceridzusammensetzung im Bereich von 10 - 90 Gew.-%, bevorzugt 25 - 75 Gew.-% liegt und dass die Menge des mindestens einen flüssigen Öls im Bereich von 10 - 90 Gew.-%, bevorzugt 75 - 25 Gew.-%, mit Bezug auf das Gewicht der Triglyceridzusammensetzung, liegt.

26. Triglyceridzusammensetzung nach einem der Ansprüche 19 - 25, **dadurch gekennzeichnet, dass** das mindestens eine flüssige Öl mindestens ein Speiseöl umfasst ausgewählt aus der Gruppe bestehend aus Rapsöl, Maisöl, Sojaöl, Sonnenblumenöl, Sonnenblumenöl mit hohem Ölsäuregehalt, Baumwollsamenöl, Maisöl, Olivenöl, Haselnussöl, Erdnussöl, flüssigen Anteilen von Palmöl oder Sheabutter, einem Anteil eines dieser flüssigen Öle oder einer Mischung von zwei oder mehreren der oben erwähnten Öle und/oder Anteilen davon.

27. Triglyceridzusammensetzung nach einem der Ansprüche 19 - 26, **dadurch gekennzeichnet, dass** das harte oder halbharte Fett Sal-Fett oder einen oder mehrere Anteile von Sal-Fett enthält.

28. Triglyceridzusammensetzung nach einem der Ansprüche 19 - 27, **dadurch gekennzeichnet, dass** die Triglyceridzusammensetzung im Wesentlichen von gehärteten Fettkomponenten frei ist.

29. Verfahren zum Herstellen des texturierten Speiseprodukts nach einem der Ansprüche 1 - 18, **dadurch gekennzeichnet, dass** das Verfahren den Schritt des Mischens von (a) 20 - 100 Gew.-% einer Triglyceridzusammensetzung in mindestens teilweise geschmolzener Form; (b) 0 - 80 Gew.-% eines Füllstoffmaterials und (c) weniger als 15 Gew.-% Wasser, wobei alle Gewichtsprozentsätze mit Bezug auf das Gesamtgewicht des Speiseprodukts ausgedrückt sind, und den Schritt des Induzierens der Kristallisation der Triglyceridzusammensetzung zu einer beständigen kristallinen Form und Bildens einer festen Struktur umfasst.

30. Verwendung der Triglyceridzusammensetzung nach einem der Ansprüche 19 - 28 für die Herstellung eines Speiseprodukts aus der Gruppe bestehend aus Zuckerbäckereizusammensetzungen, insbesondere einer Creme, einer Beschichtung, einer Tablette, einer Füllung, einem gefüllten Schokoladeprodukt, einer Schlagsahne, einem mit einer Cremeschicht beschichteten Keks, wobei die Cremeschicht als solche noch weiter mit einer Beschichtung beschichtet sein kann oder auch nicht, wobei ein Keks eine Cremeschicht aufweist, die zwischen zwei oder mehreren Keksen eingebettet ist, nichtemulgierten Aufstrichen, kulinarischen Produkten, festen Fettbestandteilen von Speiseprodukten, Weichkäse, extrudierten Produkten mit einer inneren texturierten Füllung, Backprodukten mit einer texturierten Füllung.

## Revendications

1. Produit comestible, structuré, le produit comestible contenant, exprimé sur la base de la totalité du produit,
a) entre 20 et 100 % en poids d'une composition de triglycérides
b) entre 0 et 80 % en poids d'une matière de remplissage
c) moins de 15 % en poids d'eau
dans lequel la composition de triglycérides contient par rapport au poids de la composition de triglycérides
d) moins de 57 % en poids d'acides gras saturés,
e) moins de 10 % en poids d'acides gras insaturés trans
f) au moins 15 % en poids de triglycérides SUS, S étant un acide gras saturé en C16-24, U étant un acide gras insaturé ayant au moins 18 atomes de C, lesquels triglycérides SUS sont **caractérisés par** une teneur en triglycérides SUS contenant de l'acide gras arachidique en C-20 d'au moins 3 % en poids exprimée sur le poids total de triglycérides SUS et le rapport de triglycérides AOSt/AOA est au moins de 1,5, de préférence au moins de 3,
g) au moins 8 % en poids de triglycérides U3.

2. Produit comestible, structuré, tel que revendiqué dans la revendication 1, **caractérisé en ce que** le produit contient moins de 52 % en poids, de préférence moins de 47 % en poids, idéalement moins de 42 % en poids d'acides gras saturés par rapport au poids total de la phase grasse.

3. Produit comestible, structuré, tel que revendiqué dans la revendication 1 ou 2, **caractérisé en ce que** les triglycérides SUS ont une teneur en acides gras saturés en C-20 et C-22 dans un rapport C-20/C-22 d'au moins 0,7, de préférence d'au moins 1, quand C-22 est de l'acide béhénique.

4. Produit comestible, structuré, tel que revendiqué dans l'une quelconque des revendications 1-3, **caractérisé en ce que** les triglycérides SUS ont une teneur en triglycérides SUS contenant des acides gras saturés en C-20 d'au moins 5 % en poids, de préférence d'au moins 7 % en poids, mieux encore d'au moins 10 % en poids.

5. Produit comestible structuré, tel que revendiqué dans l'une quelconque des revendications 1 - 4, **caractérisé en ce que** le rapport SUS/SSU de la composition de triglycérides est d'au moins 1.

6. Produit comestible, structuré selon l'une quelconque des revendications 1 - 5, **caractérisé en ce que** la composition de triglycérides contient des triglycérides U3 et SU2 dans une quantité telle que le rapport U3 / SU2 est d'au moins 0,5, de préférence d'au moins 1, idéalement d'au moins 1,5.

7. Produit comestible, structuré, selon l'une quelconque des revendications 1 - 6, **caractérisé en ce que** le produit comestible contient
- entre 20 et 95 % en poids d'une composition de triglycérides, de préférence entre 25 et 60 % en poids, mieux encore entre 30 et 50 % en poids
- entre 5 et 80 % en poids d'une matière de remplissage, de préférence entre 75 et 40 % en poids, mieux encore entre 70 et 50 % en poids.

8. Produit comestible, structuré, selon l'une quelconque des revendications 1 - 7, **caractérisé en ce que** le produit est un produit gras continu.

9. Produit comestible, structuré, selon l'une quelconque des revendications 1 - 8, **caractérisé en ce que** le produit alimentaire contient moins de 5 % en poids d'eau par rapport au poids total du produit alimentaire, de préférence moins de 2 % en poids..

10. Produit comestible, structuré, selon l'une quelconque des revendications 1 - 9, **caractérisé en ce que** le produit n'est pas une émulsion, en particulier n'est pas une émulsion E/H.

11. Produit comestible, structuré, tel que revendiqué dans l'une quelconque des revendications 1 - 10, **caractérisé en ce que** la composition de triglycérides comprend au moins un composant qui est de la graisse dure ou semi dure et au moins une huile liquide ou un mélange de deux ou de plus de deux huiles liquides, ladite au moins une graisse dure ou semi dure étant une graisse qui est solide ou semi solide à température ambiante et ladite au moins une huile liquide étant liquide à température ambiante.

12. Produit comestible, structuré, tel que revendiqué dans l'une quelconque des revendications 1 - 11, **caractérisé en ce que** la quantité de ladite au moins une graisse dure ou semi dure par rapport au poids de la composition de triglycérides est de l'ordre de 10-90 % en poids, de préférence de 25-75 % en poids et **en ce que** la quantité de ladite au moins une huile liquide est de l'ordre de 10-90 % en poids, de préférence de 75-25 % en poids par rapport au poids de la composition de triglycérides.

13. Produit comestible, structuré, tel que revendiqué dans l'une quelconque des revendications 1 - 12, **caractérisé en ce que** ladite au moins une huile liquide comprend au moins une huile végétale sélectionnée dans le groupe constitué d'huile de colza, d'huile de maïs, d'huile de soja, d'huile de graines de tournesol, d'huile de tournesol à haute teneur en acide oléique, d'huile de graines de coton, d'huile de maïs, d'huile d'olive, d'huile de noisette, d'huile d'arachide, de fractions liquides d'huile de palme ou de beurre de karité, d'une fraction d'une de ces huiles liquides ou d'un mélange de deux ou de plus de deux des huiles susmentionnées et/ou de fractions de celles-ci.

14. Produit comestible, structuré, tel que revendiqué dans l'une quelconque des revendications 1 - 13, **caractérisé en ce que** la graisse dure ou semi dure contient au moins 7 % de graisse de sal ou une ou plusieurs fractions de graisse de sal.

15. Produit comestible, structuré, tel que revendiqué dans l'une quelconque des revendications 1 - 14, **caractérisé en ce que** la composition de triglycérides est pratiquement exempte de composants qui sont des graisses hydrogénées.

16. Produit comestible, structuré, tel que revendiqué dans l'une quelconque des revendications 1 - 15, **caractérisé en ce que** la matière de remplissage comprend au moins un composant sélectionné dans le groupe consistant en sucre, édulcorant, farine, amidon, lait écrémé en poudre, lait entier en poudre, lactosérum en poudre, lactose, dextrose, cacao en poudre, café en poudre, matériau cellulosique, poudres de solides organiques alimentaires, poudres de solides inorganiques alimentaires ou un mélange de deux ou de plus de deux de ceux-ci

17. Produit comestible, structuré, tel que revendiqué dans l'une quelconque des revendications 1 - 16, **caractérisé en ce que** le produit alimentaire contient une quantité d'ingrédients secs, la quantité d'ingrédients secs avec une taille de particule inférieure à 15 µm étant supérieure à 30 % en poids, de préférence supérieure à 50 % en poids, mieux encore supérieure à 70 % en poids par rapport à la quantité totale d'ingrédients secs présents dans le produit alimentaire, exprimée sur une base exempte de graisse.

18. Produit comestible, structuré, tel que revendiqué dans l'une quelconque des revendications 1 - 17, **caractérisé en ce que** le produit alimentaire comestible est sélectionné dans le groupe des compositions de confiserie, en particulier une crème, un enrobage, une tablette, un fourrage, un produit chocolaté fourré, une pâte non émulsifiée, une crème à fouetter, un produit culinaire, des ingrédients gras solides pour produits alimentaires, du fromage à pâte molle.

19. Composition de triglycérides pour la production du produit comestible, structuré, tel que revendiqué dans l'une quelconque des revendications 1 - 18, **caractérisée en ce que** la composition de triglycérides contient par rapport au poids de la composition de triglycérides
a) moins de 57 % en poids d'acides gras saturés,
b) moins de 10 % en poids d'acides gras insaturés trans,
c) au moins 15 % en poids de triglycérides SUS, S étant un acide gras saturé en C16-24, U étant un acide gras insaturé ayant au moins 18 atomes de C, lesquels triglycérides SUS sont **caractérisés par** une teneur en triglycérides contenant des acides gras saturés en C-20 d'au moins 3 % en poids exprimée sur le total de triglycérides SUS, quand C-20 représente de l'acide arachidique et le rapport de triglycérides AOSt/AOA est d'au moins 1,5, de préférence d'au moins 3,
d) au moins 8 % en poids de triglycérides U3.

20. Composition de triglycérides telle que revendiquée dans la revendication 19, **caractérisée en ce que** la composition de triglycérides contient des triglycérides U3 et SU2 dans une quantité telle que le rapport U3 / SU2 est d'au moins 0,5, de préférence d'au moins 1, idéalement d'au moins 1,5.

21. Composition de triglycérides telle que revendiquée dans la revendication 19 ou 20, **caractérisée en ce que** les triglycérides SUS ont une teneur en acides gras saturés en C-20 et C-22 dans un rapport C-20 / C-22 d'au moins 0,7, de préférence d'au moins 1, quand C-22 est de l'acide béhénique.

22. Composition de triglycérides telle que revendiquée dans l'une quelconque des revendications 19 à 21, **caractérisée en ce que** les triglycérides SUS ont une teneur en triglycérides SUS contenant des acides gras en C-20 d'au moins 5 % en poids, de préférence d'au moins 7 % en poids, mieux encore d'au moins 10 % en poids

23. Composition de triglycérides telle que revendiquée dans l'une quelconque des revendications 19 - 22, **caractérisée en ce que** le rapport SUS / SSU de la composition de triglycérides est d'au moins 1.

24. Composition de triglycérides telle que revendiquée dans l'une quelconque des revendications 19 - 23, **caractérisée en ce que** la composition de triglycérides comprend au moins un composant qui est de la graisse dure ou semi dure et au moins une huile liquide ou un mélange de deux ou de plus de deux huiles liquides, ladite au moins une graisse dure ou semi dure étant une graisse qui est solide ou semi solide à température ambiante et ladite au moins une huile liquide étant liquide à température ambiante.

25. Composition de triglycérides telle que revendiquée dans l'une quelconque des revendications 19 - 24, **caractérisée en ce que** ladite au moins une graisse dure ou semi dure par rapport au poids de la composition de triglycérides est de l'ordre de 10-90 % en poids, de préférence de 25-75 % en poids et **en ce que** la quantité de ladite au moins une huile liquide est de l'ordre de 10-90 % en poids, de préférence de 75-25 % en poids par rapport au poids de la composition de triglycérides.

26. Composition de triglycérides telle que revendiquée dans l'une quelconque des revendications 19 - 25, **caractérisée en ce que** ladite au moins une huile liquide comprend au moins une huile végétale sélectionnée dans le groupe constitué d'huile de colza, d'huile de maïs, d'huile de soja, d'huile de graines de tournesol, d'huile de tournesol à haute teneur en oléique, d'huile de graines de coton, d'huile de maïs, d'huile d'olive, d'huile de noisette, d'huile d'arachide, de fractions liquides d'huile de palme ou de beurre de karité, d'une fraction d'une de ces huiles liquides ou d'un mélange de deux ou de plus de deux des huiles susmentionnées et/ou de fractions de celles-ci.

27. Composition de triglycérides telle que revendiquée dans l'une quelconque des revendications 19 - 26, **caractérisée en ce que** la graisse dure ou semi dure contient de la graisse de sal ou une ou plusieurs fractions de graisse de sal.

28. Composition de triglycérides telle que revendiquée dans l'une quelconque des revendications 19 - 27, **caractérisée en ce que** la composition de triglycérides est pratiquement exempte de composants qui sont des graisses hydrogénées.

29. Procédé pour produire le produit comestible, structuré, tel que revendiqué dans l'une quelconque des revendications 1 - 18, **caractérisé en ce que** le procédé comprend les étapes consistant à mélanger (a) 20-100 % en poids d'une composition de triglycérides dans une forme au moins en partie fondue; (b) 0-80 % en poids d'une matière de remplissage et (c) moins de 15 % en poids d'eau, tous les % en poids étant exprimés en rapport avec le poids total du produit comestible, et l'étape consistant à induire la cristallisation de la composition de triglycérides en une forme cristalline stable et à construire une structure solide.

30. Utilisation de la composition de triglycérides de l'une quelconque des revendications 19 - 28 pour la production d'un produit alimentaire du groupe consistant en compositions de confiserie, en particulier une crème, un enrobage, une tablette, un fourrage, un produit chocolaté fourré, une crème à fouetter, un biscuit recouvert d'une couche de crème, la couche de crème en tant que telle pouvant en outre être enduite ou non d'un enrobage, un biscuit ayant une couche de crème prise en sandwich entre deux ou plus de deux biscuits, des pâtes non émulsifiées, des produits culinaires, des ingrédients gras solides pour produits alimentaires, du fromage à pâte molle, des produits extrudés avec un fourrage structuré intérieur, des produits cuits avec un fourrage structuré,
